# EUROPEAN PATENT APPLICATION

(11) **EP 2 869 500 A1**
(43) Date of publication of application: **06.05.2015**
(21) Application number: 14177927.2
(22) Date of filing: 22.07.2014
(51) Int. Cl.: H04L 12/28

(54) **Communication apparatus, communication system and communication method**

(30) Priority: 29.10.2013 JP 2013224205
(71) Applicant: Toshiba Lighting & Technology Corporation, Yokosuka-shi Kanagawa 237-8510 (JP)
(72) Inventor: Terashima, Yoshiki, Kanagawa, 237-8510 (JP)
(74) Representative: Willquist, Sofia Ellinor

(57) **Abstract**

A communication apparatus according to the embodiment, which is capable of receiving a control command from an operation terminal and transmitting the control command to at least one equipment, includes a communication unit that receives the control command which controls the equipment, an equipment state determination unit that determines whether the equipment is in a state of being able to execute the control command, and a control unit that, if the equipment state determination unit determines that the equipment is not in the state of being able to execute the control command, does not transmit the control command to the equipment, and if the equipment state determination unit determines that the equipment is in the state of being able to execute the control command, transmits the control command to the equipment.

## Description

### CROSS REFERENCE TO RELATED APPLICATIONS

This application is based upon and claims the benefit of priority from the prior Japanese Patent Application No.2013 224205, filed on October 29, 2013, the entire contents of which are incorporated herein by reference.

### FIELD

Embodiments described herein relate generally to a communication apparatus, a communication system, and a communication method.

### BACKGROUND

A remote control system that remotely operates an electronic apparatus and the like with a remote controller which uses infrared light is known in the related art.

Furthermore, an illumination control system that can perform predetermined control on a lighting apparatus over a network is known.

Incidentally, an indoor network system in recent years that remotely monitors and controls equipment installed indoors over a network is under development. The indoor installed equipment can be remotely operated by transmitting a control command from a communication apparatus to indoor network equipment in response to a user's operation through an operation terminal.

For example, the communication apparatus is present that, when the user clicks on a predetermined operation button on an operation screen displayed on a web browser on a personal computer and the like, transmits the control command to network support equipment that is connected to a personal computer directly or through any relay apparatus.

### BRIEF DESCRIPTION OF THE DRAWINGS

FIG. 1 is a configuration diagram of a system according to an embodiment.
FIG. 2 is a diagram of an operation screen of an operation terminal according to the embodiment.
FIG. 3 is a block diagram illustrating a communication apparatus according to a first embodiment.
FIG. 4 is a flow chart illustrating an operation that is performed when the communication apparatus receives a control command.
FIG. 5 is a flow chart illustrating an operation that is performed when the communication apparatus receives a response from equipment.
FIG. 6 is a sequence diagram illustrating operation processes by the communication apparatus.
FIG. 7 is another sequence diagram illustrating the operation processes by the communication apparatus.
FIG. 8 is a block diagram illustrating a communication apparatus according to a second embodiment.
FIG. 9 is a flow chart illustrating operation by the communication apparatus.
FIG. 10 is a sequence diagram illustrating the operation processes by the communication apparatus.
FIG. 11 is another sequence diagram illustrating the operation processes by the communication apparatus.
FIG. 12 is a block diagram illustrating a communication apparatus according to a third embodiment.
FIG. 13 is a flow chart illustrating an operation that is performed when the communication apparatus receives the control command.
FIG. 14 is a flow chart illustrating operation of a transmission determination unit of the communication apparatus.
FIG. 15 is a sequence diagram illustrating the operation processes by the communication apparatus.
FIG. 16 is another sequence diagram illustrating the operation processes by the communication apparatus.

### DETAILED DESCRIPTION

For example, if the user pushes down the operation buttons in succession, many control commands are transmitted from the communication apparatus to the equipment in a short period of time. At this time, a defect in the control command due to reception buffer overflow on the side of the equipment or a failure in processing due to an increase in processing load occurs, a result of the control different from a user's intention is brought about.

In view of the above circumstances, an object of embodiments is to provide a communication apparatus, a communication system and a communication method, in each of which a defect in a control command due to a reception buffer overflow or a failure in processing due to an increase in processing load can be prevented, that a control command desired by a user can be transmitted.

In view of the above circumstances, embodiments provide a communication apparatus including: a communication unit that receives a control command from an operation terminal and transmits the control command to at least one equipment; an equipment state determination unit that determines whether the equipment is in a state of being able to execute the control command; and a control unit that, if the equipment state determination unit determines that the equipment is not in the state of being able to execute the control command, does not transmit the control command to the equipment, and if the equipment state determination unit determines that the equipment is in the state of being able to execute the control command, transmits the control command to the equipment.

In view of the above circumstance, embodiments provide a communication system including: an operation terminal; at least one equipment; and a communication apparatus, in which the communication apparatus includes: a communication unit that receives a control command from the operation terminal and transmits the control command to the at least one equipment, an equipment state determination unit that determines whether the equipment is in a state of being able to execute the control command, and a control unit that, if the equipment state determination unit determines that the equipment is not in the state of being able to execute the control command, does not transmit the control command to the equipment, and if the equipment state determination unit determines that the equipment is in the state of being able to execute the control command, transmits the control command to the equipment.

In view of the above circumstance, embodiments provide a communication method of receiving a control command from an operation terminal and transmitting the control command to at least one equipment, the method including: receiving the control command that controls the equipment; determining whether the equipment is in a state of being able to execute the control command; retaining the control command to the equipment if the equipment is determined that is not in a state of being able to execute the control command and transmitting the control command to the equipment if the equipment is determined that is in a state of being able to execute the control command.

According to the embodiments, an effect can be expected in which a defect in the control command due to a reception buffer overflow on the side of the equipment or a failure in processing due to an increase in processing load is prevented and the control command desired by the user can be transmitted.

Embodiments are described below referring to the drawings.

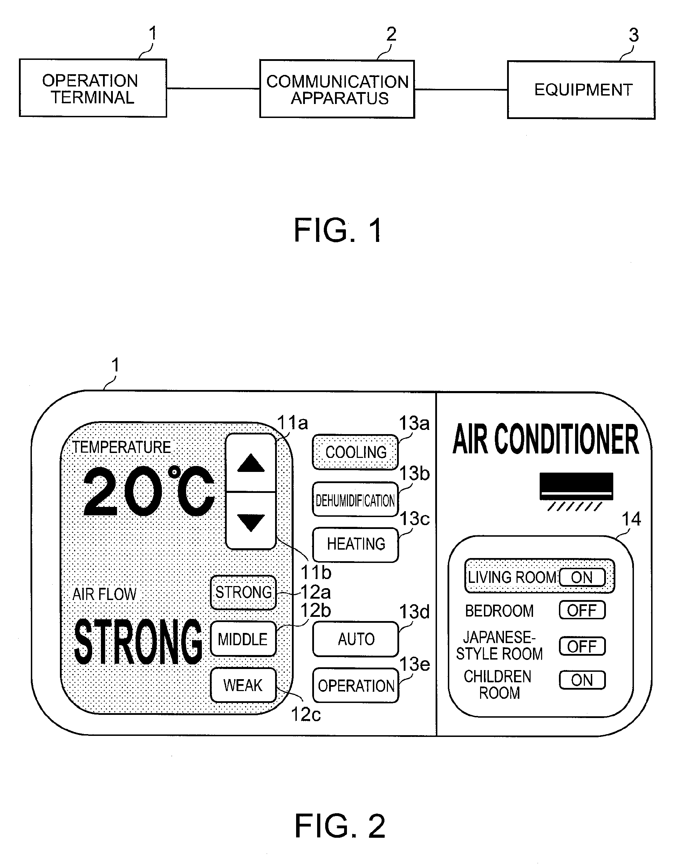

FIG. 1 is a block diagram illustrating a configuration of a system according to the embodiments. The system in FIG. 1 is configured from an operation terminal 1, a communication apparatus 2, and at least one equipment 3 that are connected to one another over a wire or wireless network.

These apparatuses may be connected to one another with an arbitrary com m unication relay apparatus or protocol conversion apparatus in between. Furthermore, the operation terminal 1 and the communication apparatus 2 may be integrally configured into one apparatus. In other words, the operation terminal 1 and the communication apparatus 2 may be physically one apparatus or may be a plurality of apparatuses that are separately configured and perform communication through an arbitrary communication section.

The operation terminal 1, for example, is a general terminal, such as a web browser equipped PC, a tablet PC, and a television set, that includes a display device and a function of communicating with the communication apparatus 2. Of course, regardless of the forms described above, the operation terminal 1 may be a general remote controller that has physical buttons.

FIG. 2 is an operation screen illustrating one example of an "air conditioner operation screen" displayed on the display device of the operation terminal 1. With an arbitrary unit such as a mouse or a touch panel, a user can operate the air conditioner operation button on the operation screen. Moreover, operation screens for operating equipments other than an air conditioner may be displayed on the display device.

Furthermore, when the user performs an arbitrary operation, the operation terminal 1 has a function of detecting the operation and transmitting a corresponding control command to the communication apparatus 2.

The communication apparatus 2 has, as a general function of a control device that is capable of controlling equipment using a communication section, a function of communicating with the operation terminal 1, a function of communicating with equipment 3, and a function of receiving a control command from the operation terminal 1 through the function of communicating with the operation terminal 1 and transmitting the control command to the equipment 3 through the function of communication with the equipment 3. In addition, the communication apparatus 2 may have a function of receiving an arbitrary response from the equipment 3.

At this point, the communication section, for example, may be an arbitrary one among ECHONET/ECHONET Lite, UPnP, HTTP, and the like.

In addition, the communication apparatus 2 has a function of generating a control packet in response to the received control command and transmitting the control packet to the suitable equipment 3. Information indicating the equipment 3 that is a transmission destination is also included in the control packet.

At this point, the multiple control packets may be generated in response to one control command. For example, if the equipment 3 is an air conditioner, when the user pushes down a "heating" button in the operation terminal 1 and transmits the control command to the communication apparatus 2, the communication apparatus 2 may generate the control packet including details, such as "operation mode: heating", "temperature setting: 20°C", and "air flow setting: strong".

Furthermore, if initial control packet commands that are transmitted from the communication apparatus 2 are "operation mode: heating", "temperature setting: 20°C", and "air flow setting: strong", and if the control packet commands that are scheduled to be transmitted thereafter are "operation mode: heating", "temperature setting: 20°C", "air flow setting: weak", only a difference, "air flow setting: weak" may be transmitted.

These are functions that are realized with the existing technology in which the communication apparatus 2 includes a web server and provides the operation screen to the web browser on the operation terminal 1 and a program on the web server detects an operation on the web browser by the user and performs predetermined processing.

Moreover, according to the embodiment, the generation of the control packet is not limited to control packet generation time, equipment, configuration, and the like. For example, an arbitrary constituent unit of the communication apparatus 2 may generate the control packet, the operation terminal 1 may generate the control packet and transmit the generated control packet directly to the communication apparatus 2, and the control command may be transmitted directly to the equipment 3 without generating the control packet and the equipment 3 may be made to interpret the control command.

The equipment 3 is a general type of controlled equipment that includes the function of communicating with the communication apparatus 2, and for example, is an air conditioner that supports ECHONET/ECHONET Lite. The equipment 3 may have a function of transmitting to the communication apparatus 2 a response indicating reception or complete execution of the control command transmitted from the communication apparatus 2.

Usually, the controlled equipment has low processing capability and has a small amount of installed memory in view of a cost, compared to the operation terminal equipped with the display device or the communication apparatus that is a controller. For this reason, there is a limitation in that in some cases, when many control commands are transmitted from the communication apparatus for a short period of time, correct processing cannot be performed.

As a general service using the system in FIG. 1, for example, a case is given in which, using the web browser equipped tablet PC, the user controls an indoor air conditioner that supports ECHONET/ECHONET Lite from the "air conditioner operation screen" as illustrated in FIG. 2, which is displayed on the web browser, by performing an operation on operation mode buttons 13 (13a to 13e) for "cooling", "dehumidification", "heating", and "operation ON/OFF", temperature setting buttons 11 (11a and 11b), and air flow setting buttons 12 (12a to 12c).

At this point, if the user, for example, pushes down the button 13a for cooling, the button 13b for dehumidification, and the button 13c for heating, in succession, many control commands are transmitted from the communication apparatus 2 to the equipment 3 for a short period of time. At this time, a defect in the control command due to reception buffer overflow on the side of the equipment 3 or a failure in processing due to an increase in processing load occurs, a result of the control is brought about as opposed to a user's intention. For example, if the equipment 3 receives only two control commands, "cooling" and "dehumidification" and additionally the control command "heating" does not completely enter into the reception buffer while the two control commands are under processing, the equipment 3 continues to perform the "dehumidification" operation, regardless of the fact that the user pushed down the button 13c last for heating.

### First Embodiment

According to a first embodiment, it is determined whether or not the equipment is in a state of being able to receive and execute the next control command, depending on whether or not the response indicating the reception or complete execution of the control command is received after the control command is transmitted to the equipment that is the transmission destination. Moreover, the following description assumes that in an initial state such as when the communication apparatus 2 first receives the control command, the target equipment is in a state of being able to receive the control command.

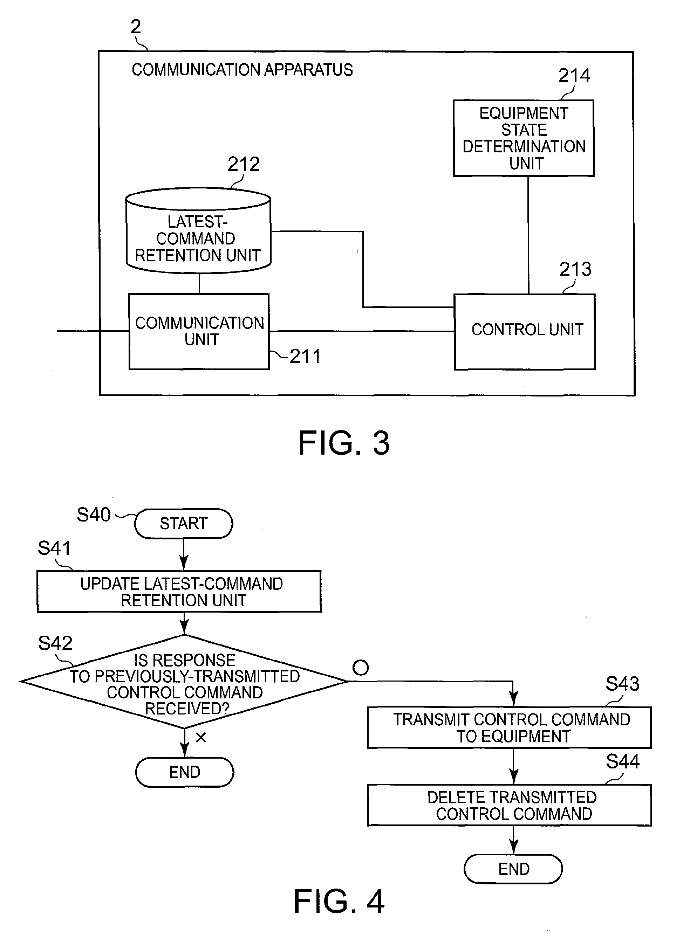

FIG. 3 is a block diagram illustrating the communication apparatus 2 according to the first embodiment.

The communication apparatus 2 according to the first embodiment includes a communication unit 211, a latest command retention unit 212, a control unit 213, and an equipment state determination unit 214.

The communication unit 211 has a function of receiving the control command from the operation terminal 1 and an arbitrary response transmitted from the equipment 3 and transmitting the control command to the equipment 3 through a predetermined communication section. Furthermore, the communication unit 211 has a function of updating the control command retained in the latest command retention unit 212 when the control command is received from the operation terminal 1. The update here refers to an update operation in which the control command is newly stored when the latest command retention unit 212 is empty and overwriting occurs when the control command is already stored.

The latest command retention unit 212 has a function of storing the control command. Each time the communication unit 211 receives the control command, the control command that is stored is updated.

The control unit 213 has a function in which if the equipment state determination unit 214 determines that predetermined equipment is not in the state of being able to receive and execute the next control command, the control command to the equipment is not transmitted and if the equipment state determination unit 214 determines that the predetermined equipment is in the state of being able to receive and execute the next control command, the latest control command to the equipment is transmitted, and the control command stored in the latest command retention unit 212 is deleted, or if the latest control command is not stored, nothing is done. In other words, the control unit 213 is configured to perform such that:
if the equipment 3 is determined that is in a state of being able to execute the control command, a predetermined control command stored in the latest command retention unit is transmitted to the equipment.

The equipment state determination unit 214 has a function of determining whether or not the equipment is in the state of being able to receive and execute the next control command, depending on whether or not the response indicating the reception or complete execution of the previously transmitted control command is received from the equipment that is the transmission destination of the control command.

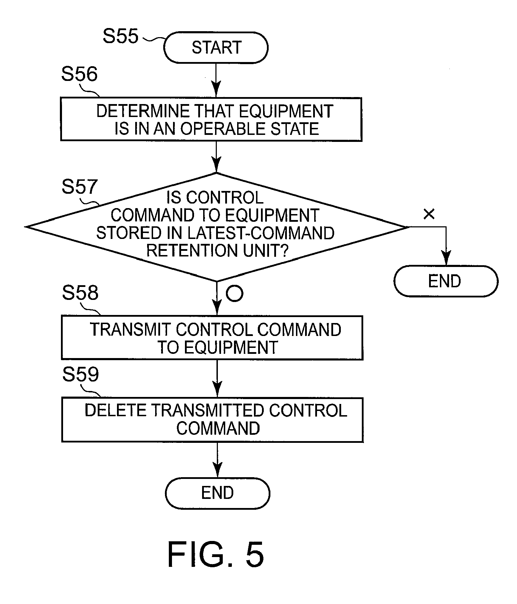

FIGS. 4 and 5 are flow charts illustrating operation of the communication apparatus 2 according to the first embodiment.

First, an operation that is performed when the communication apparatus 2 receives a predetermined control command is described referring to the flow chart in FIG. 4. The flow in FIG. 4 starts with the communication unit 211 receiving the control command (S40).

When the control command is received, the communication unit 211 updates the latest command retention unit 212 (S41). The update here refers to the update operation in which the control command is newly stored when the latest command retention unit 212 is empty and overwriting occurs when the control command is already stored.

Next, the equipment state determination unit 214 determines whether or not the equipment that is the transmission destination is in the state of being able to receive and execute the next control command, depending on whether or not the response indicating the reception or complete execution of the control command that is previously transmitted to the equipment is received from the equipment that is the transmission destination of the control command (S42).

If the equipment state determination unit 214 determines that the equipment that is the transmission destination is not in the state of being able to receive and execute the next control command, the control command is not transmitted to the equipment 3 that is the transmission destination. If the equipment state determination unit 214 determines that the equipment 3 that is the transmission destination is in the state of being able to receive and execute the next control command, the control unit 213 transmits the control command to the equipment 3 that is the transmission destination (S43) and deletes the control command from the latest command retention unit 212 (S44).

That is, the latest command retention unit 212 is in a state of retaining the control command that is always the latest and is not transmitted to the equipment 3 that is the transmission destination, or in an empty state.

Next, an operation is described that is performed when the communication unit 211 receives from arbitrary equipment 3 the response indicating the reception or complete execution of the control command that is previously transmitted to the equipment, referring to FIG. 5.

First, when the communication unit 211 receives from the equipment 3 the response indicating the reception or complete execution of the control command that is previously transmitted to the equipment, the flow starts (S55), and the response or a result of the determination is preserved in a storage unit that is not illustrated. For example, the response or the result of the determination may be retained in the equipment state determination unit 214, or may be preserved in such a manner that the equipment state determination unit 214 can read the response or the result of the determination. Accordingly, the equipment state determination unit 214 determines that the equipment is in the state of being able to execute the control command (S56).

Next, it is determined whether or not the control command to the equipment is stored in the latest command retention unit 212 (S57). At this point, because the previously transmitted control command is deleted from the latest command retention unit 212, the retention of the control command in the latest command retention unit 212 is a case where a separate control command is received after the control command is transmitted. In other words, when the separate control command is received, because the equipment state determination unit 214 determines that the equipment which is the transmission destination is not in the state of being able to receive and execute the next control command, only the latest control command is retained in the latest command retention unit 212 without the control command being transmitted.

If the control command is retained in the latest command retention unit 212 in S57, the control unit 213 transmits the control command being stored in the latest command retention unit 212 to the equipment that is the transmission destination (S58), and deletes the control command from the latest command retention unit 212 (S59).

In contrast, if the control command is not retained in the latest command retention unit 212 in S57, the flow ends.

Moreover, after a predetermined control command is transmitted to the equipment that is the transmission destination, the control unit 213 may store the control command that is not transmitted until the response indicating the reception or complete execution of the control command is received, using an arbitrary method without deleting the control command from the latest command retention unit 212 (without executing S44 and S59), may compare the stored control command and the control command stored in the latest command retention unit 212 when the response indicating the reception or complete execution of the control command is received from the equipment, and may transmit to the equipment only the control command that is determined to be the latest control command.

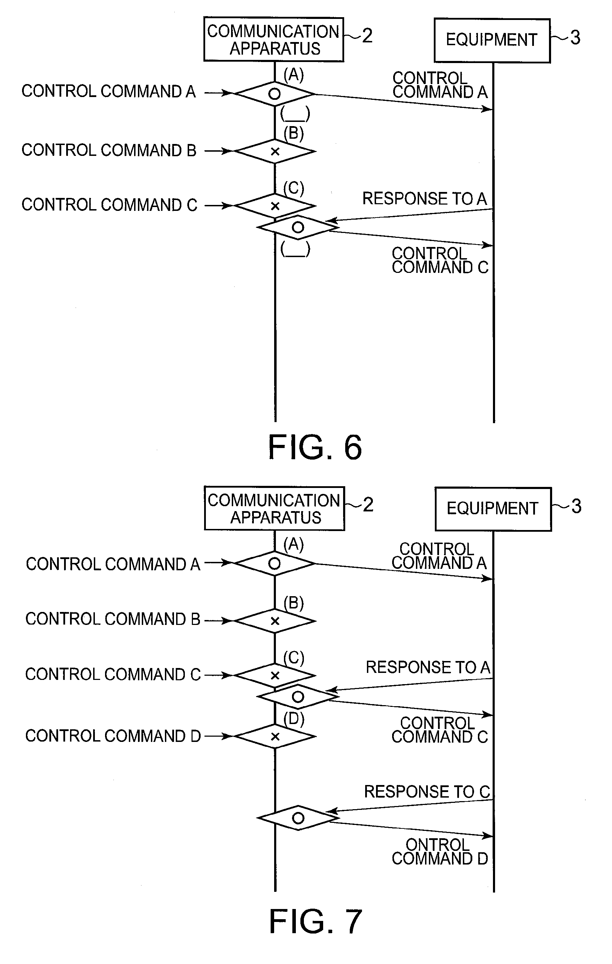

FIG. 6 is a sequence diagram illustrating operation processes by the communication apparatus 2 according to the first embodiment. At this point, it is assumed that all control commands A, B, and C are performed in succession on the same equipment 3.

First, if the communication unit 211 receives the control command A, the control command A is stored in the latest command retention unit 212. At this time, because it is determined that the equipment 3 is in the state of being able to execute the next control command, the communication apparatus 2 transmits the control command A to the equipment 3 and deletes the control command A from the latest command retention unit 212. Moreover, in the sequence diagram, the state where the control command A is stored in the latest command retention unit 212 is expressed as (A), and the state where the latest command retention unit 212 is empty is expressed as (_) (the same applies hereafter).

Next, if the control commands B and C to the equipment 3 are received in succession, when the response indicating the reception or complete execution of the control command A is not received from the equipment 3, the equipment state determination unit 214 determines that the equipment 3 is not in the state of being able to process the next control command and the control unit 213 does not transmit the control commands B and C.

At this time, in the latest command retention unit 212, B and C are overwritten, and C is retained at the end.

When the communication apparatus 2 receives the response indicating the reception or complete execution of the control command A from the equipment 3, because the control unit 213 transmits the control command that is retained in the latest command retention unit 212 at that time, only the control command C is transmitted.

Moreover, as illustrated in FIG. 7, if after the communication apparatus 2 transmits the control command C, the control command D is received, the latest command retention unit 212 is updated with the control command D, and after the response to the control command C is received, the control command D is transmitted to the equipment 3.

### Effects of the First Embodiment

According to the first embodiment, there is no need for the equipment side to be equipped with a function of interpreting a special control command, and even though the operations are performed in succession, the control command desired by the user can be executed without a load being applied to the equipment side.

Furthermore, because it is determined whether or not the next control command can be processed depending on whether or not the communication apparatus receives the response indicating the reception or complete execution of the previously transmitted control command, the defect in the control command due to the reception buffer overflow at the equipment side is certainly prevented and the failure in the processing due to the increase in the processing load can be prevented.

### Second Embodiment

A second embodiment is different from the first embodiment in that it is determined whether or not the equipment is in the state of being able to receive and execute the next control command, depending on whether or not a predetermined time elapses from when the control command is transmitted to the equipment that is the transmission destination. A figure of the entire system according to the second embodiment is the same as FIG. 1 in which the system according to the first embodiment is illustrated. The same constituents as those according to the first embodiment are given corresponding reference numerals, and detailed descriptions of the same constituents are omitted.

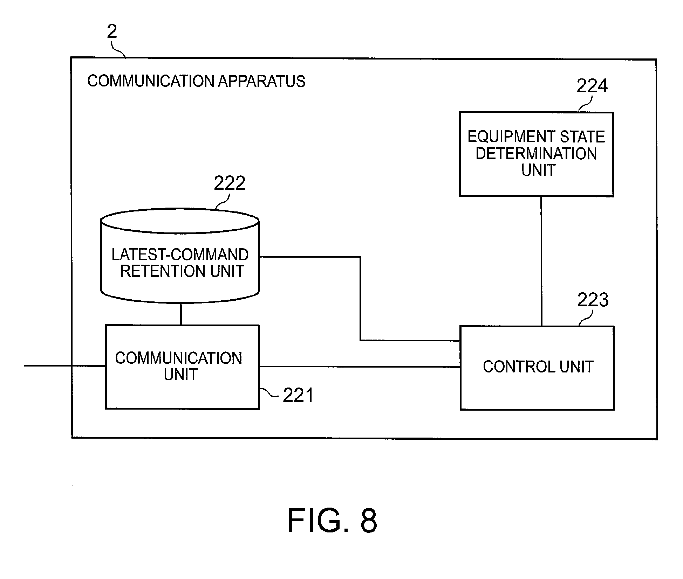

The communication apparatus 2 according to the second embodiment can be expressed with a block diagram in FIG. 8.

The communication apparatus 2 according to the second embodiment includes a communication unit 221, a latest command retention unit 222, a control unit 223, and an equipment state determination unit 224.

The communication unit 221 has a function of receiving the control command from the operation terminal 1 and transmitting the control command to the equipment 3 through a predetermined communication section. Furthermore, the communication unit 221 has a function of updating the control command retained in the latest command retention unit 222 when the control command is received from the operation terminal 1. The update here refers to an update operation in which the control command is newly stored when the latest command retention unit 222 is empty and overwriting occurs when the control command is already stored.

The latest command retention unit 222 has a function of storing the control command. Each time the communication unit 221 receives the control command, the control command that is stored is updated.

The control unit 223 has a function in which if the equipment state determination unit 224 determines that the equipment that is the transmission destination of the control command is not in the state of being able to receive and execute the next control command, the control command is not transmitted, and if the equipment state determination unit 224 determines that the equipment that is the transmission destination is in the state of being able to receive and execute the next control command, the latest control command is transmitted, and the control command is deleted from the latest command retention unit 222 or if the latest control command is not stored, nothing is done.

The equipment state determination unit 224 determines whether or not the equipment is in the state of being able to receive and execute the next control command, depending on whether or not a predetermined time elapses from when a previous control command is transmitted to the equipment that is the transmission destination.

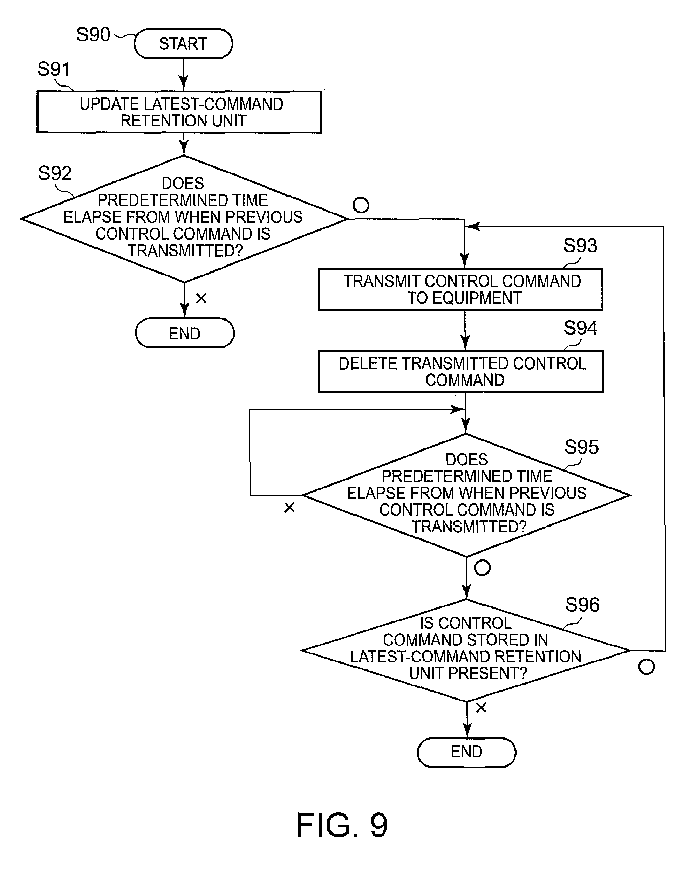

An operation that is performed when the communication apparatus 2 according the second embodiment receives a predetermined control command is described referring to FIG. 9. The flow in FIG. 9 starts with the communication unit 221 receiving an arbitrary control command (S90).

When the control command is received, the communication unit 221 updates the latest command retention unit 222 (S91). The update here refers to an update operation in which the control command is newly stored when the latest command retention unit 222 is empty and overwriting occurs when the control command is already stored.

Next, the equipment state determination unit 224 determines whether or not the equipment that is the transmission destination is in the state of being able to receive and execute the control command, depending on whether or not a predetermined time elapses from when a previous control command is transmitted to the equipment that is the transmission destination of the control command (S92).

At this point, as a value of the predetermined time, a fixed value may be used, and a value that differs depending on contents of the control command may be used. For example, if ECHONET/ECHONET Lite is used in expressing the control command, an object code (a type of control target equipment such as an air conditioner and the like), a property code (a function of the control target such as an operation mode), and a property data value (contents of the control such as heating) are included in the control command. For example, in a general air conditioner, it takes time to perform various types of processing necessary for switching between the operation modes within the air conditioner, but the switching between the operation modes is not frequently performed. In contrast, the number of types of processing necessary for the temperature setting within the air conditioner is small, and it does not take much time to perform the processing. For this reason, for example, values of the elapsed time for the operation mode and for the temperature setting may respectively be set to LONG or SHORT on the assumption that if the property code included in the control command is for the operation mode, the processing within the air conditioner takes much time to perform and if the property code is for the temperature setting, the processing within the air conditioner takes less time to perform.

In S92, if the equipment state determination unit 224 determines that the equipment that is the transmission destination is not in the state of being able to receive and execute the next control command, the control unit 223 ends the flow without transmitting the control command. If the equipment state determination unit 224 determines that the equipment that is the transmission destination is in the state of being able to receive and execute the next control command, the control unit 223 transmits the control command to the equipment that is the transmission destination (S93) and deletes the control command from the latest command retention unit 222 (S94).

Next, the equipment state determination unit 224 determines whether or not a predetermined time elapses from when the control command is transmitted (S93) (S95). When the predetermined time elapses, the equipment state determination unit 224 determines whether or not other control commands stored in the latest command retention unit 222 are present, that is, whether or not the previously transmitted control command is the latest (S96). In S96, if the stored control commands are present, the control unit 223 transmits the latest of the control commands to the equipment that is the transmission destination (S93), and if the stored control command is not present, the flow ends. Moreover, in S95, if a predetermined time does not elapse, S95 is repeatedly executed until the predetermined time elapses.

The reception of an arbitrary control command triggers starting of these types of processing in FIG. 9.

For this reason, if an operation flow that is started by the arbitrary control command proceeds from S92 to S93 ∼ S96, the latest command retention unit 222 is sequentially updated with other control commands because at the time S92 is executed, the operation flow ends that is started by the other control commands that are received within a predetermined time after the control command is transmitted to the equipment that is the transmission destination. Furthermore, if the other control commands are not received within the predetermined time after the control command is transmitted to the equipment that is the transmission destination, because the latest command retention unit 222 is not updated after S94 is executed, the latest command retention unit 222 is in a state where the control command is not stored.

Therefore, it is considered that when the operation flow that proceeds to S93 ∼ S96 reaches S96, the latest control command that is received within a predetermined time is stored in the latest command retention unit 222, or the control command that is stored is not present. If the control command that is stored is not present, because the previously transmitted control command is the latest, the operation flow ends. If the control command that is stored is present, because the control command is the latest, the control command is transmitted to the equipment, and the flow from S93 to S96 is repeated.

Moreover, after a predetermined control command is transmitted to the equipment 3, the control unit 223 may store the control command that is not transmitted until a predetermined time elapses after when the control command is transmitted to the equipment that is the transmission destination, using an arbitrary method without deleting the control command from the latest command retention unit 222 (without executing S94), may compare the stored control command and the control command stored in the latest command retention unit 222 when the predetermined time elapses, and may transmit to the equipment only the control command that is determined to be the latest control command.

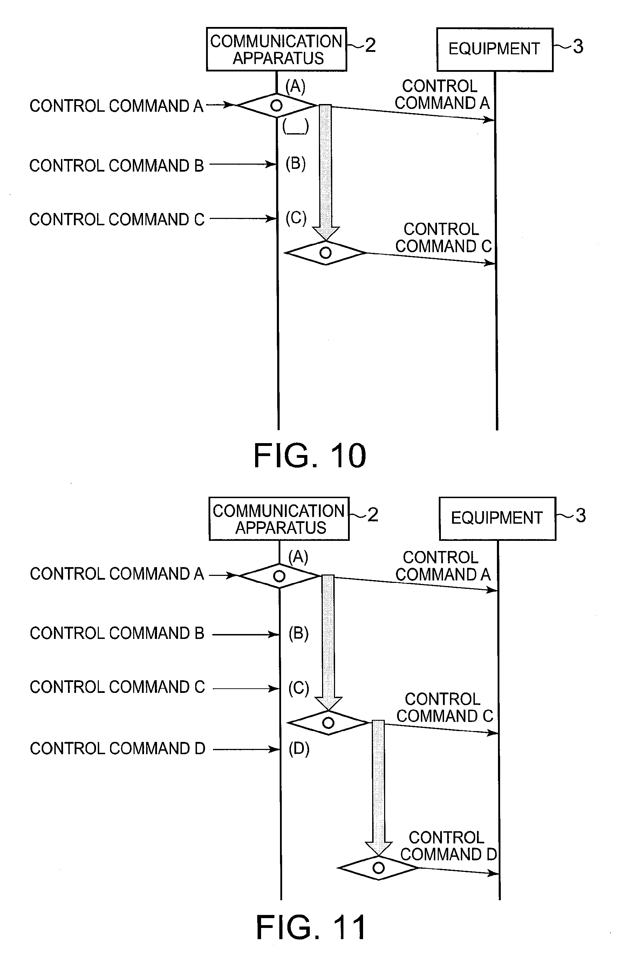

FIG. 10 is a sequence diagram illustrating the operation processes of the communication apparatus 2 according to the second embodiment. At this point, it is assumed that all the control commands are performed in succession on the same equipment 3.

First, if the communication apparatus 2 receives the control command A, the control command A is stored in the latest command retention unit 222. At this time, because it is determined that the equipment 3 is in the state of being able to execute the next control command, the communication apparatus 2 transmits the control command A to the equipment 3.

In addition, if the communication apparatus 2 receives in succession the control commands B and C to the equipment 3, that is, receives in succession the control commands B and C to the equipment 3 within a predetermined time after the control command A is transmitted, the equipment state determination unit 224 determines that the equipment 3 is not in the state of being able to receive and execute the next control command and the control unit 223 does not transmit the control commands B and C. At this time, in the latest command retention unit 222, the control commands B and C are overwritten, and the control command C is retained at the end.

When a predetermined time elapses from when the control command A is transmitted, the equipment state determination unit 224 determines that the equipment 3 is in the state of being able to receive and execute the next control command, and because the control unit 223 transmits the control command that is retained in the latest command retention unit 222 at that time, only the control command C is transmitted to the equipment 3.

Moreover, as illustrated in FIG. 11, if after the communication apparatus 2 transmits the control command C, the control command D is received, the latest command retention unit 222 is updated with the control command D, and after a predetermined time elapses from when the control command C is transmitted, the control command D is transmitted to the equipment 3.

### Effects of the Second Embodiment

According to the second embodiment, there is no need for the equipment side to be equipped with a function of interpreting a special control command, and if the operations are performed in succession, the last control command can be transmitted.

Furthermore, there is no need for the equipment side to be equipped with a function of transmitting the response indicating the reception or complete execution of the previously received control command, it is determined whether or not the next control command can be processed, depending on whether or not a predetermined time elapses from when the previous control command is transmitted, the defect in the control command due to the reception buffer overflow at the equipment side is certainly prevented, and the failure in the processing due to the increase in the processing load can be prevented.

### Third Embodiment

A third embodiment is different from the first and second embodiments in that a transmission determination unit 235 is provided in the communication apparatus 2 according to the third embodiment. A figure of the entire system according to the third embodiment is the same as FIG. 1, in which the system according to the first and second embodiments is illustrated. The same constituents are given corresponding reference numerals, and detailed descriptions of the same constituents are omitted.

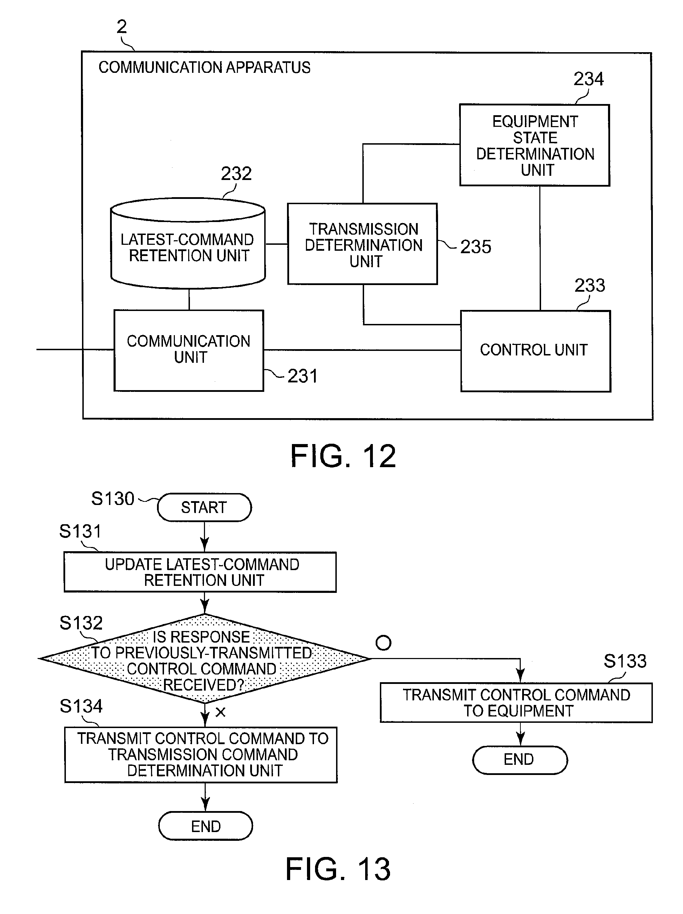

FIG. 12 is a block diagram illustrating the communication apparatus 2 according to the third embodiment.

The communication apparatus 2 according to the third embodiment includes a communication unit 231, a latest command retention unit 232, a control unit 233, an equipment state determination unit 234, and a transmission determination unit 235.

The communication unit 231 has a function of receiving the control command from the operation terminal 1 and an arbitrary response transmitted from the equipment 3 and transmitting the control command to the equipment 3 through a predetermined communication section. The communication unit 231 has a function of updating the control command retained in the latest command retention unit 232. That is, the communication unit 231 has a function of updating the control command retained in the latest command retention unit 232 when receiving the control command from the operation terminal 1. The update here refers to an update operation in which the control command is newly stored when the latest command retention unit 232 is empty and overwriting occurs when the control command is already stored.

The latest command retention unit 232 has a function of storing the control command. Each time the communication unit 231 receives the control command, the control command that is stored is updated.

The control unit 233 has a function in which if the equipment state determination unit 234 determines that predetermined equipment is not in the state of being able to receive and execute the next control command, the control command to the equipment is not transmitted and if the equipment state determination unit 234 determines that the predetermined equipment is in the state of being able to receive and execute the next control command, the latest control command to the equipment is transmitted, and the control command stored in the latest command retention unit 232 is deleted, or if the latest control command is not stored, nothing is done.

The equipment state determination unit 234 has a function of determining whether or not the equipment that is the transmission destination of the control command is in the state of being able to receive and execute the next control command. A determination method and determination timing are described below.

The transmission determination unit 235 has a function in which it is determined whether or not a predetermined control command that is received after the equipment that is the transmission destination receives the next command, therefore received at a timing when the equipment is not in the state of being able to execute the control command, and is not transmitted to the equipment is the latest control command to the equipment that is the transmission destination, the control unit 233 is made to transmit the control command to the equipment that is the transmission destination if the control command is the latest, and the control command is not transmitted if the control command is not latest.

In other words, the transmission determination unit 235 is configured to perform such that:
retaining the control command if the communication unit 231 receives the control command, and the equipment state determination unit 234 determines that the equipment 3 is not in the state of being able to execute the control command;
determining whether the retained control command retained by the transmission determination unit 235 and the stored control command that is stored in the latest command retention unit 232 are consistent with each other after a predetermined time elapses; and
transmitting the control command if the retained control command and the stored control command are consistent with each other and the equipment state determination unit 234 determines that the equipment 3 is in the state of being able to execute the control command.

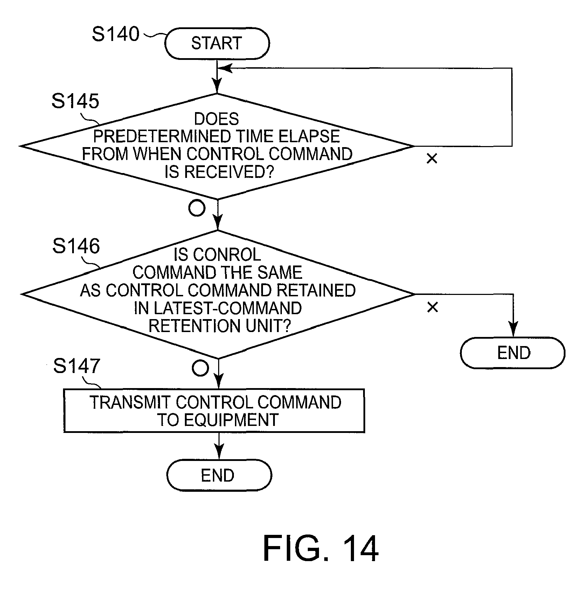

FIGS. 13 and 14 are flow charts illustrating operation of the communication apparatus 2 according to the third embodiment.

First, an operation that is performed when the communication apparatus 2 receives a predetermined control command is described referring to FIG. 13. The flow in FIG. 13 starts with the communication unit 231 receiving the control command (S130).

When an arbitrary control command is received, the communication unit 231 updates the latest command retention unit 232 (S131). The update here refers to an update operation in which the control command is newly stored when the latest command retention unit 232 is empty and overwriting occurs when the control command is already stored.

At this time, the equipment state determination unit 234 determines whether or not the equipment that is the transmission destination is in the state of being able to receive and execute the next control command, depending on whether or not the response indicating the reception or complete execution of the control command that is previously transmitted to the equipment is received from the equipment that is the transmission destination of the control command (S132).

If the equipment state determination unit 234 determines that the equipment that is the transmission destination is in the state of being able to receive and execute the next control command, the control unit 234 transmits the control command to the equipment that is the transmission destination (S133). If the equipment state determination unit 234 determines that the equipment that is the transmission destination is not in the state of being able to receive and execute the next control command, the control command is transmitted to the transmission determination unit 235 (S134).

Moreover, at this point, in a method of determining whether or not the equipment that is transmission destination is in the state of being able to receive and execute the next control command, the determination is made based on whether or not the communication unit 231 receives the response indicating that the equipment that is transmission destination receives or completely executes the previously transmitted control command, but the determination may be made depending on whether or not a predetermined time elapses after when the previous control command is transmitted to the equipment that is the transmission destination.

Next, operation flow of the transmission determination unit 235 is described referring to FIG. 14.

The operation flow from S145 to S148 in the transmission determination unit 235 is called a determination process.

The determination process starts every time the transmission determination unit 235 receives an arbitrary control command that is transmitted in S134. For this reason, it is considered that the multiple determination processes proceed at the same time.

The transmission determination unit 235 starts the determination process after the control command is received and is held without being transmitted to the equipment that is the transmitting destination (S140). At a point in time at which a predetermined time elapses from when the control command is received (S145), the previously received (held) control command and the control command that is stored in the latest command retention unit 232 at that time are compared, and it is determined whether or not the control command is the latest, depending on whether or not consistency is present (S 146).

If the control command received by the transmission determination unit 235 and the control command that is stored in the latest command retention unit 232 are consistent with each other, because the received (held) control command is the latest, the control unit 233 transmits the control command to the equipment that is the transmission destination (S147). If the control command received by the transmission determination unit 235 and the control command that is stored in the latest command retention unit 232 are not consistent with each other, because the received (held) control command is not latest, the determination process on the control command ends.

Moreover, if ECHONET/ECHONET Lite is used in expressing the control command, the determination for consistency, for example, can be performed by performing a comparison in terms of a value of an address of the transmission destination, a value of an object code included in the control command, a value of a property code, and a value of a property data.

If the multiple contents, for example, "operation mode: heating", "temperature setting: 20°C", "air flow setting: strong", and the like are included in the control command, the determination may be performed depending on whether or not consistency is present in terms of all the contents.

Furthermore, as a value of a predetermined time, a fixed value may be used and a value may be used that differs depending on contents of the control command.

For example, if ECHONET/ECHONET Lite is used in expressing the control command, an object code (a type of control target equipment such as an air conditioner, and the like), a property code (a function of the control target such as an operation mode), a property data value (contents of the control such as heating) are included in the control command. At this point, for example, the control unit assumes that if the property code included in the control command is for the operation mode, the processing within the air conditioner takes much time to perform and if the property code included in the control command is for the temperature setting, the processing within the air conditioner takes less time to perform, and may respectively set values of the elapsed time for the operation mode and for the temperature setting to LONG or SHORT.

Moreover, the elapsed time here is calculated from the time when the transmission determination unit 235 receives the control command, but a point in time at which the elapsed time starts is not limited to this calculation. For example, the time when the communication unit 231 receives the control command or the time when the user performs the operation may also be possible.

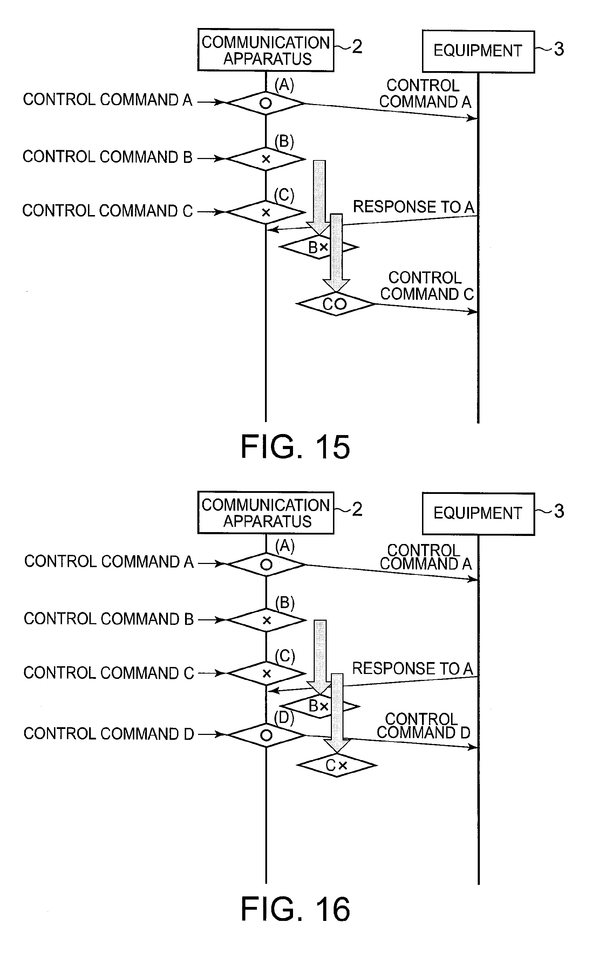

FIGS. 15 and 16 are sequence diagrams illustrating the operation processes of the communication apparatus 2 according to the third embodiment. At this point, it is assumed that all the control commands are performed in succession on the same equipment 3.

First, referring to FIG. 15, an operation is described that is performed when the same operation as in the example described according to the first embodiment and the second embodiment is performed in the communication apparatus according to the third embodiment.

When the communication unit 231 receives the control command A, the control command A is stored in the latest command retention unit 232. At this time, because it is determined that the equipment 3 is in the state of being able to execute the next control command, the communication apparatus transmits the control command A to the equipment 3.

Subsequently, if the communication apparatus 2 receives the control command B to the equipment 3 while not receiving the response from the equipment 3 that indicates that the equipment 3 receives or completely executes the control command A, because it is determined that the equipment 3 is not in the state of being able to execute the next control command, the control command B is transmitted to the transmission determination unit 235 and the determination process on the control command B starts. At this time, the control command that is stored in the latest command retention unit 232 is updated with B.

In the same manner, if the communication apparatus 2 receives the control command C to the equipment 3 while not receiving the response from the equipment 3 that indicates that the equipment 3 receives or completely executes the control command A, because it is determined that the equipment 3 is not in the state of being able to execute the next control command, the control command C is transmitted to the transmission determination unit 235 and the determination process on the control command C starts. At this time, the latest command retention unit 232 is updated with the control command C, with the stored control command B being overwritten, and the control command C is retained at the end.

When a predetermined time elapses from when the control command B is received, the transmission determination unit 235 compares the control command B and the control command that is stored in the latest command retention unit 232. At this time, because the control command being stored is the control command C, it is determined that the control command B is not latest, and the determination process ends without transmitting the control command B to the equipment 3.

Next, when a predetermined time elapses from when the control command C is received, the transmission determination unit 235 compares the control command C and the control command that is stored in the latest command retention unit 232. At this time, because the control command being stored is the control command C, it is determined that the control command C is the latest command, and the control command C is transmitted to the equipment 3.

That is, according to the third embodiment, if a sequence of operations is performed during a time interval that is shorter than a predetermined time, there is a likelihood that when the sequence of operations ends, only the last control command will be transmitted without the control command being transmitted until the sequence of operations ends.

FIG. 16 is a sequence diagram in a case where the control command D is received immediately after the control command C in FIG. 15. FIG. 16 illustrates an operation example in which a problem is suppressed in which according to the first embodiment and the second embodiment, if the control command D is received immediately after the control command C is transmitted, a time lag occurs between a point in time at which the control command D is received and a point in time at which the equipment 3 executes the control command D.

In other words, according to the first embodiment and the second embodiment, if the control command D is received immediately after the control command C is transmitted, the control command D, as illustrated in FIGS. 7 and 11, is transmitted after the response indicating that the equipment that is the transmission destination receives or completely executes the control command C is received, or after a predetermined time elapses from when the control command C is transmitted. For this reason, a case is possible where the time lag occurs between the point in time at which the control command D is received and the point in time at which the equipment that is the transmission destination executes the control command D.

First, if the communication unit 231 receives the control command A, the control command A is stored in the latest command retention unit 232. Next, because it is determined that the equipment 3 is in the state of being able to execute the next control command, the communication apparatus transmits the control command A to the equipment 3.

Subsequently, if the communication apparatus 2 receives the control command B to the equipment 3 while not receiving the response from the equipment 3 that indicates that the equipment 3 receives or completely executes the control command A, because it is determined that the equipment 3 is not in the state of being able to execute the next control command, the control command B is transmitted to the transmission determination unit 235 and the determination process on the control command B starts.

In the same manner, if the communication apparatus 2 receives the control command C to the equipment 3 while not receiving the response from the equipment 3 that indicates that the equipment 3 receives or completely executes the control command A, because it is determined that the equipment 3 is not in the state of being able to execute the next control command, the control command C is transmitted to the transmission determination unit 235 and the determination process on the control command C starts.

Next, it is assumed that the communication apparatus 2 receives the response indicating the reception or complete execution of the control command A from the equipment 3 and thereafter receives the control command D.

At this time, the latest command retention unit 232 is sequentially updated with the control commands B, C, and D, and the control command D is retained at the end. In the determination process on the control command B and the determination process on the control command C that are performed thereafter, it is determined that the control commands B and C are not latest, and the determination process ends without transmitting the control commands B and C.

Furthermore, when the communication apparatus 2 receives the control command D, because the response to the previously transmitted control command A is already received, the equipment state determination unit 234 determines that the equipment 3 is in the state of being able to receive and execute the next control command and the control command D is transmitted to the equipment 3.

### Effect of the Third Embodiment

That is, according to the third embodiment, if a sequence of operations is performed at a time interval that is shorter than a predetermined time, there is a likelihood that when the sequence of operations ends, the last control command will be transmitted without the control command being transmitted until the sequence of operations ends.

The first embodiment and the second embodiment are advantageous to a service in which a period of time during which the equipment is not in the state of being able to execute the control command is long and a period of time during which the sequence of operations is performed is short. The third embodiment is advantageous to a service in which the period of time during which the equipment is not in the state of being able to execute the control command is short and the period of time during which the sequence of operations is performed is long.

For example, in the air conditioner, instructions for the switching between the operation modes, such as "heating", "cooling", and "dehumidification", require many types of operations within the air conditioner and take time to implement. However, normally, the switching between the operation modes is not performed frequently. For this reason, it can be said that the first embodiment and the second embodiment are advantageous to these operations.

In contrast, an instruction for "temperature setting" does not require many types of operations within the air conditioner, but in most cases, the operations are performed in succession until a desired temperature is reached. For example, if it is desired that the setting temperature be changed from 18°C to 25°C, because an instruction "raise the setting temperature" is carried out seven times, it can be said that the third embodiment is advantageous to these operations.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

## Claims

1. A communication apparatus comprising:
a communication unit that receives a control command from an operation terminal and transmits the control command to at least one equipment;
an equipment state determination unit that determines whether the equipment is in a state of being able to execute the control command; and
a control unit that, if the equipment state determination unit determines that the equipment is not in the state of being able to execute the control command, does not transmit the control command to the equipment, and if the equipment state determination unit determines that the equipment is in the state of being able to execute the control command, transmits the control command to the equipment.

2. The apparatus according to claim 1, further comprising:
a latest command retention unit in which the control command that the communication unit receives last is stored,
wherein the control unit is configured to perform such that:
if the equipment is determined that is in a state of being able to execute the control command, a predetermined control command stored in the latest command retention unit is transmitted to the equipment.

3. The apparatus according to claim 2, further comprising:
a transmission determination unit,
wherein the transmission determination unit is configured to perform such that:
retaining the control command if the communication unit receives the control command, and the equipment state determination unit determines that the equipment is not in the state of being able to execute the control command;
determining whether the retained control command retained by the transmission determination unit and the stored control command that is stored in the latest command retention unit are consistent with each other after a predetermined time elapses; and
transmitting the control command if the retained control command and the stored control command are consistent with each other and the equipment state determination unit determines that the equipment is in the state of being able to execute the control command.

4. The apparatus according to any one of claims 1 to 3,
wherein the equipment state determination unit determines that the equipment is in the state of being able to execute the control command when a response to the control command that is transmitted last to the equipment is received.

5. The apparatus according to any one of claims 1 to 4,
wherein the equipment state determination unit determines that the equipment is in the state of being able to execute the control command after a predetermined time elapses from when the control command is transmitted to the equipment.

6. A communication system comprising:
an operation terminal;
at least one equipment; and
the apparatus according to any one of claims 1 to 5.

7. A communication method of receiving a control command from an operation terminal and transmitting the control command to at least one equipment, wherein the method comprising:
receiving the control command that controls the equipment;
determining whether the equipment is in a state of being able to execute the control command; and
retaining the control command if the equipment is determined that is not in a state of being able to execute the control command, and transmitting the control command to the equipment if the equipment is determined that is in a state of being able to execute the control command.
